# EUROPEAN PATENT APPLICATION

(11) **EP 1 505 817 A2**
(43) Date of publication of application: **09.02.2005**
(21) Application number: 04011976.0
(22) Date of filing: 19.05.2004
(51) Int. Cl.: H04M 11/06

(54) **ADSL modem apparatus and ADSL modem communication method**

(30) Priority: 08.08.2003 JP 2003290680
(71) Applicant: MATSUSHITA ELECTRIC INDUSTRIAL CO., LTD., Kadoma-shi, Osaka 571-8501 (JP)
(72) Inventor: Noma, Nobuhiko, Yokohama-shi, Kanagawa 227-0033 (JP); Takagi, Genzo, Ageo-shi, Saitama 362-0047 (JP); Nagai, Motoyoshi, Yokohama-shi, Kanagawa 247-0008 (JP); Araki, Mitsuhiro, Kiyose-shi, Tokyo 204-0023 (JP); Atsuta, Akira, Tokyo 153-0064 (JP)
(74) Representative: Grünecker, Kinkeldey, Stockmair & Schwanhäusser Anwaltssozietät

(57) **Abstract**

An ADSL modem apparatus is provided that accurately obtains a communication distance to an opposing ADSL modem apparatus, and that enables ADSL communication in an area exceeding the communication distance conventionally used. In the ADSL modem apparatus, a transmitter-receiver transmits and receives a carrier specified by a communication standard in a handshake procedure, and a processor estimates a communication distance to an opposing ADSL modem apparatus in accordance with a reception level of the carrier.

## Description

### BACKGROUND OF THE INVENTION

### 1. Field of the Invention

This invention relates to an ADSL modem apparatus and an ADSL modem communication method.

### 2. Description of Related Art

In ADSL communication, ADSL modems are provided at both ends of a subscriber line, which connects a telephone office (center side) and a subscriber's house (remote side), and high-speed data communication is performed between the ADSL modems. However, because ADSL communication uses a bandwidth between several tens KHz and 1M KHz, and an attenuation ratio in a high frequency region is high, a signal communication distance is heavily restricted.

In response to this restriction, Japanese Laid-Open Patent Publication 2003-87352 discloses a technology that enables an extension of a signal communication distance, even though the attenuation ratio in the high frequency region is high. In the technology, ADSL modem apparatuses in both the center and remote sides detect gain characteristics of signals received in an initialization procedure, inform the detected gain characteristics to each other, and correct gain characteristics of subsequent transmission signals in accordance with the gain characteristics informed by the other side.

However, even if the above-described conventional technology is used, a maximum transmission rate is decreased by an effect of attenuation or noises when the communication distance increases. Accordingly, the ADSL communication can usually be performed only within several kilometers (e.g. 5.5 km with 1.5M bit/second transmission rate, or 1.8 km with 6M bit/second transmission rate) from the telephone office (i.e. center side). 1 mile is equal to about 1.6 km.

On the other hand, because ADSL communication recently increases the transmission rate, it is highly desired to make ADSL communication usable in the area exceeding the conventionally used communication distance. However, in order to perform ADSL communication in the area exceeding the conventionally used communication distance, each ADSL modem apparatus must accurately obtain the communication distance to the opposing ADSL modem apparatus, and the attenuation in high frequency region must be avoided in accordance with the communication distance.

### SUMMARY OF THE INVENTION

The present invention is provided to address the above-described problems. The purpose of the present invention is to provide an ADSL modem apparatus and an ADSL modem communication method that accurately obtain the communication distance to the opposing ADSL modem apparatus, and thus enables the use of ADSL communication outside the conventionally usable communication distance.

According to the present invention, designated carriers, which are previously defined by a communication standard, are exchanged in a handshake procedure, and a communication distance to an opposing ADSL modem apparatus is estimated in accordance with the reception levels of the designated carriers. Then, the signal energy in a high frequency region is concentrated to a low frequency region in accordance with the estimated communication distance.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a block diagram illustrating a schematic configuration of a communication system at remote side, including an ADSL modem apparatus according to the present invention.
Fig. 2 is a functional block diagram of a transceiver shown in Fig. 1.
Fig. 3 illustrates relation between frequencies and amounts of signal energy attenuation when the communication distance is 1km.
Fig. 4 illustrates relation between frequencies and amounts of signal energy attenuation when the communication distance is 5km.
Fig. 5 illustrates relation between frequencies and amounts of signal energy attenuation when the communication distance is 9km.
Fig. 6 is a table illustrating an example of the relation between frequencies and amounts of signal energy attenuation shown in Figs. 3 through 5.
Fig. 7 is a flowchart illustrating a communication operation of the ADSL modem in the remote side communication system according to the first embodiment of the present invention.
Fig. 8 is a flowchart illustrating a communication operation of the ADSL modem in a center communication system according to the first embodiment of the present invention.
Fig. 9 illustrates an example of a PSD used in the current ADSL communication.
Fig. 10 illustrates distributions (proportions) of signal energy for PSDs prepared for the communication distances to the opposing ADSL modem apparatus, in the ADSL communication apparatus according to the first embodiment of the present invention.
Fig. 11 is a flowchart illustrating a communication operation of the ADSL modem apparatus in the remote side communication system according to the second embodiment of the present invention.
Fig. 12 is a flowchart illustrating a communication operation of the ADSL modem apparatus in the center side communication system according to the second embodiment of the present invention.

### DETAILED DESCRIPTION OF PREFERRED EMBODIMENTS

The embodiments of the present invention are explained in the following, in reference to the above-described drawings.

### First Embodiment

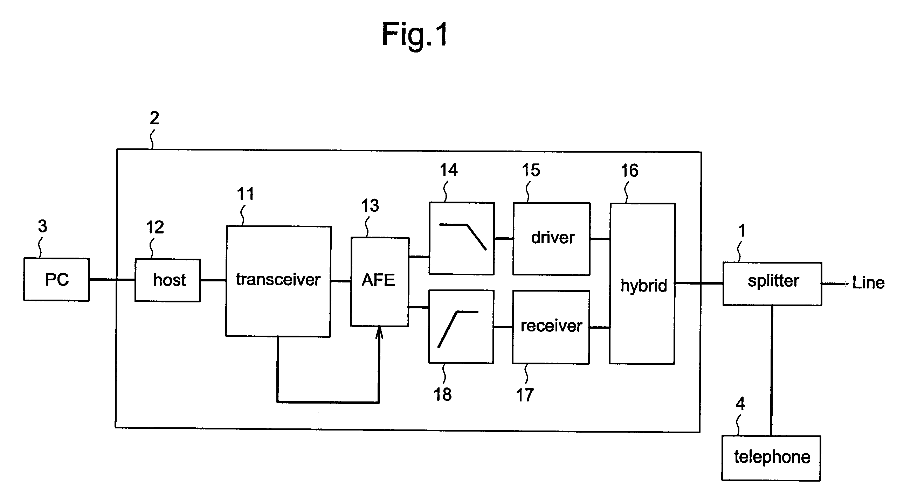

Fig. 1 is a block diagram schematically illustrating a communication system at the remote (ATU-R) side using an ADSL modem apparatus of the present invention. In the communication system as illustrated in Fig. 1, a public phone line or a similar phone line (hereafter referred to as line) is connected to an ADSL communication apparatus 2 via a splitter 1. Further, a user terminal 3 is connected to the ADSL communication apparatus 2. When the user terminal 3 and the telephone 4 share one line, the splitter 1 is necessary. However, when the telephone 4 is not used, the splitter 1 is not needed. It is also possible to provide a user terminal 3 having a built-in ADSL communication apparatus 2.

The ADSL communication apparatus 2 at the remote side includes a transceiver 11 that performs a handshake procedure (which will be later-described), and a host 12 that controls the entire operation including the one of the transceiver 11. At the line side of the transceiver 11, units are implemented with an analog circuit via an analog front end (hereafter referred to as AFE) 13. A driver 15 is connected to a D/A converter of the AFE 13 via an analog filter 14, so that an analog signal amplified by the driver 15 is transmitted to the line via a hybrid 16. An analog signal transmitted from the line is received by a receiver 17 via the hybrid 16, and then input into an A/D converter of the AFE 13 via an analog filter 18. When sampling data is output from the A/D converter, the AFE 13 outputs the sampling data to the transceiver 11.

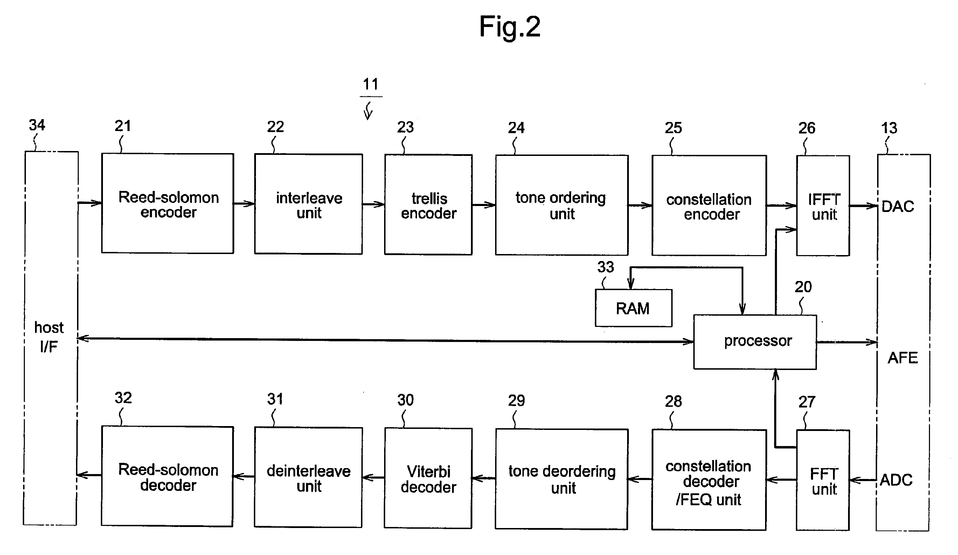

Fig. 2 is a functional block diagram of the transceiver 11. A processor 20 has a function to perform a handshake procedure prior to initiating data transmission (SHOWTIME).

The transmission process side of the transceiver 11 includes a Reed-Solomon encoder 21 that adds a redundant bit for checking error, an interleave unit 22 that reorders data to enable a burst error correction during Reed-Solomon decoding, a trellis encoder 23 that performs data convolution of a trellis encoding, a tone ordering unit 24 that assigns the number of bits to each carrier, a constellation encoder 25 that maps a phase of transmission data on constellation coordinates, and an IFFT unit 26 that performs an Inverse Fast Fourier Transform (hereafter referred to as IFFT) on data after the constellation encoding process.

The reception process side of the transceiver 11 includes an FFT unit 27 that performs a Fast Fourier Transform (hereafter referred to as FFT) on sampling data of a received signal, a constellation decoder/FEQ unit 28 that decodes constellation data of the FFT output signal and corrects the phase on the constellation coordinates, a tone deordering unit 29 that restores data assigned to each carrier by the tone ordering at the transmission side, a Viterbi decoder 30 that performs Viterbi decoding on the received data (data restored by the tone deordering unit 29), a deinterleave unit 31 that restores data reordered by the interleave unit at the transmission side, and a Reed-Solomon decoder 32 that removes the redundant bit added by the Reed-Solomon decoder at the transmission side. A RAM 33 is a work area of the processor 20, which will be used for performing the handshake and initialization procedures. In addition, the RAM 33 stores a carrier table (later described). The transceiver 11 is connected to the host 12 via a host interface (I/F) 34.

An ADSL modem apparatus at the center (ATU-C) side is connected to the above-described ADSL modem apparatus 2 via a metallic cable. The ADSL modem apparatus at the center side has the same configuration as the above-described ADSL communication apparatus 2. In the following explanation, the ADSL modem apparatus at the center side is referred by the same reference numeral 2. Telephone 4 is not included when the center side is an exchange installed by a communication industry.

Each processor 20 in the ADSL modem apparatuses 2 at the center and remote sides estimates a communication distance to the opposing ADSL modem apparatus 2 in the handshake procedure, and performs xDSL communication by selecting a PSD (Power Spectral Density) in accordance with the estimated communication distance. More specifically, the processor 20 in each ADSL modem apparatus 2 estimates the communication distance based on, for example, the reception level of a carrier included in a FLAG exchanged in the handshake procedure, and performs xDSL communication by concentrating a communication signal spectrum into a low frequency region in accordance with the communication distance estimated by the ADSL modem apparatuses 2 at both center and remote sides.

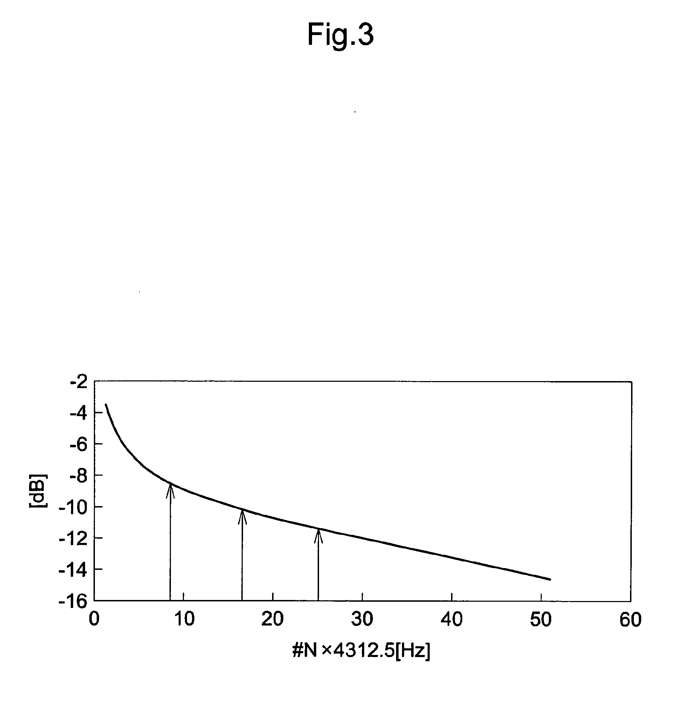

Figs. 3 through 5 illustrate relation between frequencies and amounts of signal energy attenuation, where the communication distance are different from each other. Fig. 3, Fig.4 and Fig. 5 show the relation when the communication distances are 1 km, 5 km and 9 km, respectively. In Figs. 3 through 5, the frequencies are marked as carrier indexes (#Nx4312.5Hz) on the horizontal axis, and the amounts of signal energy attenuation are marked on the vertical axis.

The arrows shown in each figure illustrate three carriers for an upstream FLAG used in Annex A of G.hs. More specifically, these three arrows respectively correspond to carriers of the carrier indexes #9, #17 and #25, which are received by the ADSL modem apparatus at the center side as FLAG signals in the handshake procedure. As shown in these figures, when the carrier frequency increases, the signal energy attenuation increases. Further, when the communication distance increases, the signal energy attenuation increases. In Annex A of G.hs, carrier indexes #40 and #64 are used for a downstream FLAG. In other words, the ADSL modem apparatus at the remote side receives signals of those carriers in the handshake procedure.

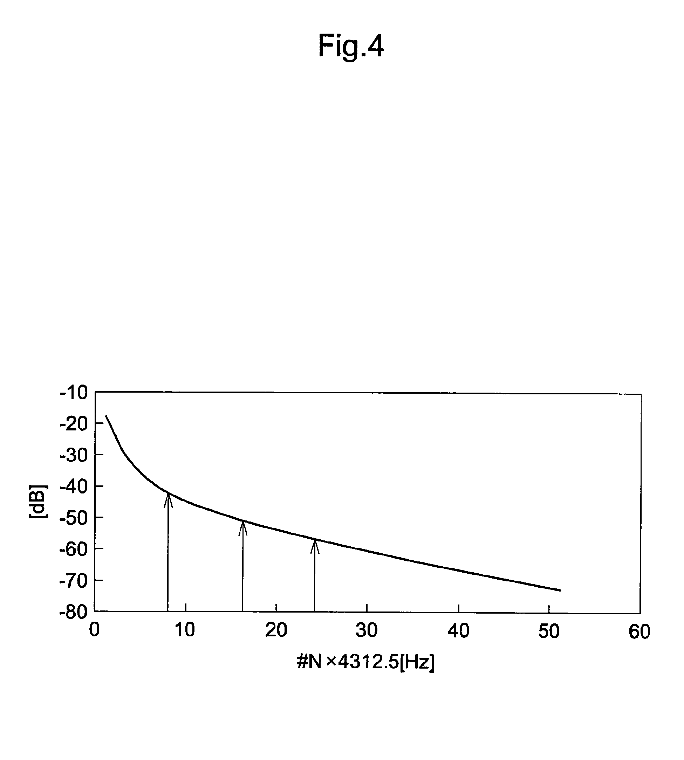

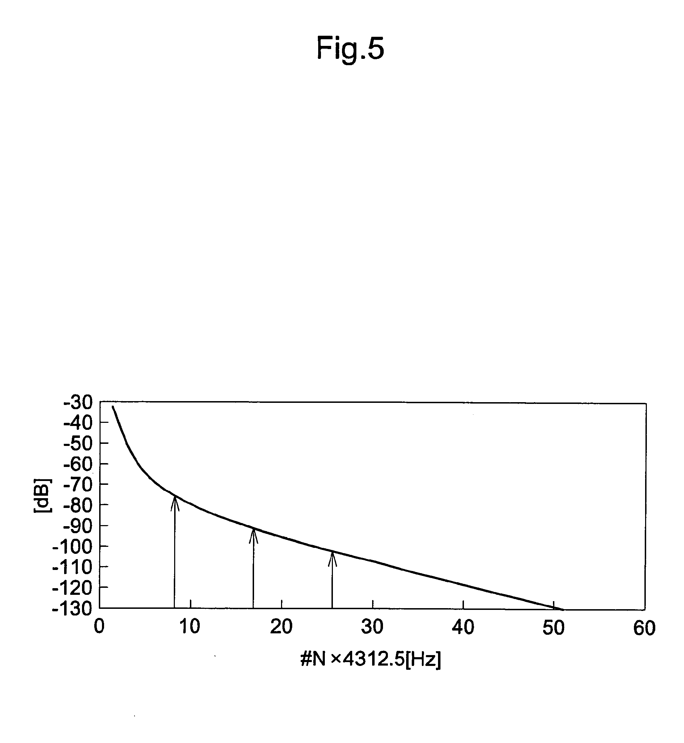

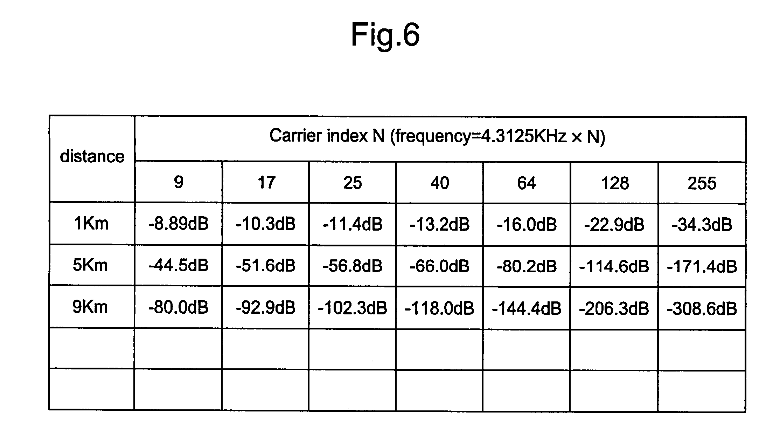

Fig. 6 is a table illustrating relation between the communication distances and the amounts of signal energy attenuation shown in Figs. 3 through 5. In Fig. 6, the amounts of signal energy attenuation corresponding to three arrows shown in Fig. 3 are respectively stored in the columns of carrier indexes #9, #17 and #25 for "1km." Similarly, the columns of carrier indexes #9, #17, and #25 for "5km" and "9km" respectively show the amounts of signal energy attenuation corresponding to the three arrows shown in Fig. 4 and Fig. 5. In this embodiment, both ADSL modem apparatuses 2 at the center and remote sides store this same table in their respective RAM 33, and the communication distance to the opposing ADSL modem apparatus 2 is estimated by using the signal energy attenuation characteristics, as explained later.

The carrier table shown in Fig. 6 also stores the amounts of signal energy attenuation corresponding to carrier indexes #40, #64, #128 and #255. These amounts are not (directly) used in the center ADSL modem apparatus of this embodiment, since the communication distance is estimated based on the carriers used in Annex A of G.hs, which uses carrier indexes #9, #17 and #25 as FLAG signals. As described above, carrier indexes #40 and #64 are used in the ADSL modem apparatus at the remote side.

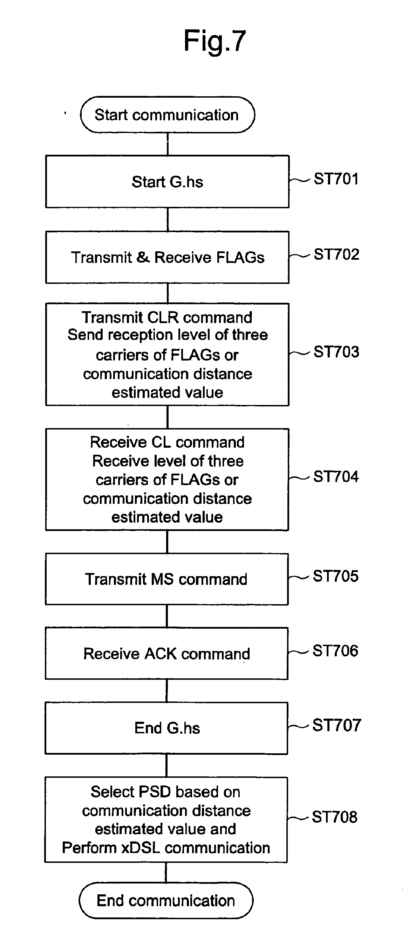

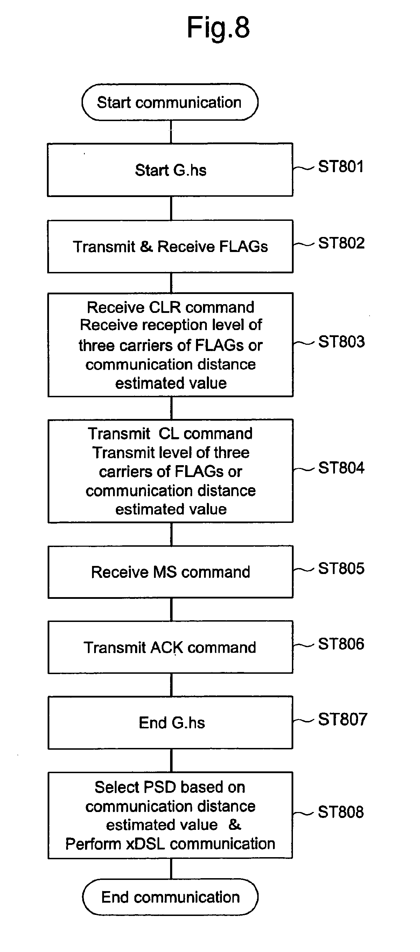

A communication operation in the ADSL modem apparatus 2 having the above-described configuration is explained. Fig. 7 is a flowchart illustrating a communication operation of the ADSL modem apparatus 2 in the remote side communication system (hereinafter referred to as remote ADSL modem apparatus 2) according to the first embodiment. Fig. 8 is a flowchart illustrating a communication operation of the ADSL modem apparatus 2 in the center side communication system (hereinafter referred to as center ADSL modem 2) according to the first embodiment.

As shown in Fig. 7, when communication begins, the remote ADSL modem apparatus 2 starts G.hs (ST 701), and transmits/receives FLAG signals to/from the center ADSL modem apparatus 2 (ST 702). More specifically, the remote ADSL modem apparatus sends carriers of the three carrier indexes #9, #17 and #25 for the upstream FLAG, and receives carriers of the carrier indexes #40 and #64 for the downstream FLAG.

Upon receiving the FLAG signals, the remote ADSL modem apparatus 2 estimates the communication distance to the center ADSL modem apparatus 2 based upon the reception levels of the two carriers. More specifically, in order to estimate the communication distance, the remote ADSL modem apparatus 2 refers to the carrier table stored in the RAM 33 in accordance with the amounts of signal energy attenuation of the two carriers. Thus, because the communication distance to the opposing ADSL modem apparatus 2 can be estimated based upon the reception levels of carriers exchanged in G.hs, a new signal is not required to estimate the communication distance.

The remote ADSL modem apparatus 2 compares the reception levels of the two carriers to estimate the communication distance to the corresponding center ADSL modem apparatus 2. For example, if the signal energy of carrier index #64 is attenuated by 3 dB from the signal energy of the carrier index #40, the communication distance is determined as 1km by referring to the carrier table shown in Fig. 6. Similarly, if the signal energy is attenuated by 14 dB and by 26 dB, the communication distances are determined as 5km and 9km, respectively. When the communication distance is checked at the remote ADSL mode apparatus 2, the signal energy of the carrier index #56, which is defmed in the downstream of Annex A, may be utilized. In this case, the remote ADSL modem apparatus compares signal levels of any two carriers from the received multiple carriers to estimate the communication distance to the center ADSL modem apparatus.

After the communication distance is estimated, the remote ADSL modem 2 sends a CLR (Capability List and Request) command to the center ADSL modem apparatus 2 (ST 703). The CLR command lists (enumerates) the capabilities of the sender apparatus and requests the capabilities of the corresponding receiver apparatus. The CLR command includes the reception levels of two carriers for the FLAG received from the center ADSL modem apparatus 2, or the communication distance estimated based upon the reception levels (hereinafter referred to as "communication distance estimated value").

After the CLR command has been sent, the remote ADSL modem apparatus 2 receives a CL (Capability List) command sent by the center ADSL modem 2 in response to the CLR command (ST 704). By the reception of the CL command, the remote ADSL modem apparatus 2 receives from the center ADSL modem apparatus 2, reception levels of three carriers (#9, #17 and #25) for the upstream FLAG sent by the remote ADSL modem apparatus 2, or a communication distance estimated value estimated by the center ADSL modem apparatus 2 based upon the reception levels. Thus, the remote ADSL modem apparatus 2 obtains communication distance estimated values estimated by both center and remote ADSL modem apparatuses.

Upon the reception of the CL command, the remote ADSL modem apparatus 2 sends a MS (Mode Select) command in order to inform the center ADSL modem apparatus 2 of a desired communication mode (ST 705). When the center ADSL modem apparatus 2 accepts (agrees to) the MS command, the center ADSL modem apparatus 2 returns an ACK command, which indicates the acceptance (agreement). The remote ADSL modem apparatus 2 receives the ACK command (ST 706). Upon the reception of the ACK command, the remote ADSL modem apparatus 2 terminates G.hs (ST 707).

After G.hs is terminated, the remote ADSL modem apparatus 2 selects a PSD based upon the communication distance estimated values obtained by both center and remote ADSL modem apparatuses, and begins xDSL communication with the selected PSD (ST 708). Then, after data as the object of communication is transmitted, the communication ends. The selection of PSDs is explained later.

Meanwhile, the center ADSL modem apparatus 2 performs an operation similar to that of the remote ADSL modem apparatus 2. In other words, as shown in Fig. 8, upon the initiation of communication, G.hs begins (ST 801). Then, the center ADSL modem apparatus 2 transmits/receives FLAG signals to/from the remote ADSL modem apparatus 2 (ST 802). The center ADSL modem apparatus 2 estimates a communication distance to the remote ADSL modem apparatus 2 based upon the reception level of the three carriers (#9, #17 and #25) for the upstream FLAG, in the same way as the remote ADSL modem apparatus does.

The center ADSL modem apparatus compares signal levels of any two carriers from the received multiple carriers to estimate the communication distance to the opposing ADSL modem apparatus. For example, when the signal energy of the carrier index #9 is attenuated by 2 dB from the signal energy of the carrier index #25, the communication distance is determined as 1km by referring to the carrier table shown in Fig. 6. Similarly, when the signal energy is attenuated by 12 dB, the communication distance is determined as 5km, and when the signal energy is attenuated by 22 dB, the communication distance is determined as 9km. Thus, because the communication distance to the opposing ADSL modem apparatus is determined based upon the reception levels of any two carriers selected from the received multiple carriers, the communication distance can be estimated accurately by using the signal energy characteristics, which attenuate depending on the communication distance.

After the communication distance has been estimated, the center ADSL modem apparatus 2 receives a CLR command sent by the remote ADSL modem apparatus 2 (ST 803). By the reception of the CLR command, the center ADSL modem apparatus 2 is informed of the reception levels of the two carriers for the downstream FLAG sent by the center ADSL modem apparatus, or a communication distance estimated value estimated by the remote ADSL modem apparatus 2 based on the reception levels. Thus, the center ADSL modem apparatuses obtains the communication distance estimated values estimated by both the center and remote ADSL modem apparatuses.

After the CLR command has been received, the center ADSL modem apparatus 2 sends a CL command to the remote ADSL modem apparatus 2 (ST 804). The CL command includes the reception levels of three carriers for the upstream FLAG received from the remote ADSL modem apparatus 2, or the communication distance estimated value estimated by the center ADSL modem apparatus 2 based on the reception levels.

After the CL command has been sent, the center ADSL modem apparatus 2 receives a MS (Mode Select) command sent by the remote ADSL modem apparatus 2 (ST 805). Thus, the MS command informs the center ADSL modem apparatus 2 of the communication mode desired by the remote ADSL modem apparatus 2. When this mode is acceptable, the center ADSL modem apparatus 2 sends an ACK command indicating the acceptance (ST 806). After the ACK command has been sent, the center ADSL modem apparatus 2 terminates G.hs. (ST 807).

After G.hs has been terminated, the center ADSL modem apparatus 2 selects a PSD based upon the communication distance estimated values obtained by the center and remote ADSL modem apparatuses 2, and begins xDSL communication with the selected PSD (ST 808). Then, after data, as the object of communication, has been transmitted, the communication ends.

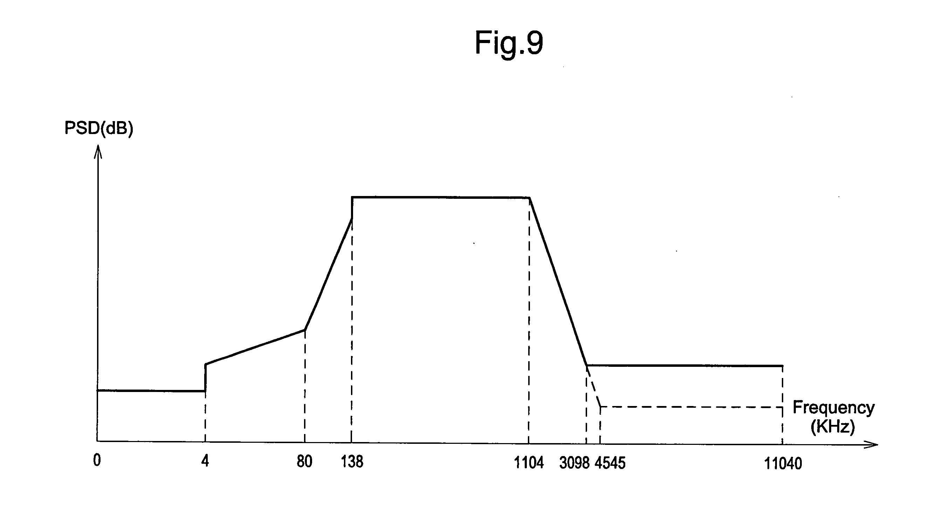

The following explains a procedure in which the center and remote ADSL modem apparatuses change (select) the PSD to perform the xDSL communication. The PSD refers to a density of signal energy assigned to a communication signal. Fig. 9 is an example illustrating a PSD ordinarily used in the downstream line of the current ADSL communication. In Fig. 9, the horizontal axis indicates frequencies, and the vertical axis indicates the amounts of signal energy (gain) assigned by a sender ADSL modem apparatus 2.

As shown in Fig. 9, in the current ADSL communication, communication in the downstream line is performed so that the peak of signal energy is set in the frequency range between 138 kHz and 1104 kHz. Hereinafter, the frequency band used for data communication is called a data communication band. When the communication distance increases, signal energy attenuation of the high frequency region in the data communication band increases. Accordingly, the ADSL modem apparatus 2 of the present embodiment concentrates signal energy (usually) assigned to a high frequency region into a low frequency region without changing the total amount of signal energy in the data communication band. Thus, communication is performed so that the peak of signal energy is increased in the low frequency region.

This embodiment provides three types of PSDs, in which the signal energy in the data communication band is concentrated into the low frequency region depending upon the communication distance to the opposing ADSL modem apparatus 2. In other words, three types of PSDs respectively correspond to three different communication distances and have different distribution patterns (frequency ranges) of signal energy. More specifically, these three PSDs are respectively prepared for 1 km, 5km and 9km of the communication distances to the opposing ADSL modem apparatus. The ADSL modem apparatus 2 of the present embodiment selects one of these PSDs in accordance with the communication distance estimated based upon the carriers for FLAG exchanged in G.hs, and performs xDSL communication with the selected PSD. Accordingly, because the xDSL communication is performed by using the PSD that is modified in accordance with the estimated communication distance, effects of the signal energy attenuation caused by the communication distance can be suppressed while the communication is performed.

The above-described example illustrates the modification of PSD in the data communication band used in the downstream line of the current ADSL communication. Similarly, three PSDs used in the upstream line are provided for 1 km, 5 km and 9 km of the communication distances to the opposing ADSL modem apparatus, respectively. The signal energy in the data communication band for these three PSDs is concentrated into the low frequency region depending on the communication distances to the opposing ADSL modem apparatus. Then, one of these PSDs is selected in accordance with the communication distance estimated based upon the carriers for the FLAG exchanged in G.hs, and xDSL communication is performed with the selected PSD.

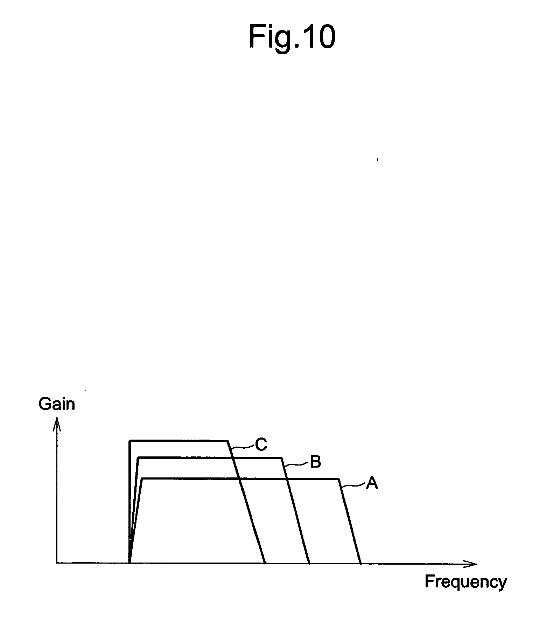

Fig. 10 illustrates signal energy distribution (proportion) for PSDs provided for communication distances to the opposing ADSL modem apparatus 2 in the ADSL modem apparatus 2 of the present embodiment. In Fig. 10, the horizontal axis indicates frequencies, and the vertical axis indicates the amounts of signal energy (gain) assigned by the sender ADSL modem apparatus 2.

Alphabet "A" in Fig. 10 shows signal energy for the PSD to be selected when the communication distance to the opposing ADSL modem apparatus 2 is estimated at 1 km. Similarly, "B" and "C" show the signal energy for the PSDs to be selected when the communication distances are estimated at 5 km and 9 km, respectively.

As shown by "A" in Fig. 10, the signal energy in the high frequency region is not concentrated into the low frequency region within the data communication band, when the communication distance is 1 km, which is relatively short, and the attenuation of the signal energy is small. On the other hand, in "B" of Fig. 10, the signal energy in the high frequency region is slightly concentrated into the low frequency region within the data communication band, when the communication distance is 5 km, which is relatively long, and the attenuation of the signal energy is large. Furthermore, "C" of Fig. 10 shows a condition when the communication distance is 9 km, which is extremely long, and the signal energy heavily attenuates. Accordingly, the signal energy in the high frequency region is largely concentrated into the low frequency region within the data communication band.

As described above, the ADSL modem apparatus 2 of the present embodiment selects a PSD in accordance with the communication distance estimated based upon the amounts of signal energy attenuation of carriers for the FLAG exchanged in G. hs. In other words, the signal energy in the high frequency region is concentrated into the low frequency region within the specific frequency band, in order to perform xDSL communication. Accordingly, the communication can be performed by using the low frequency region, which is less affected by noises or attenuation regardless of the length of the communication distance. Therefore, ADSL communication can be performed in the communication distance exceeding the conventionally usable distance. Second Embodiment

The ADSL modem apparatus 2 of the second embodiment is different from that of the first embodiment in the following manner. Signals (hereinafter, referred to as "SWEEP signals"), which are output while changing frequency, are exchanged in addition to the carriers for the FLAG of G.hs. The communication distance is estimated based on the reception level of the SWEEP signal as well as the carriers for the FLAG of G. hs.

In this embodiment, the SWEEP signals are output by changing frequencies at every 1 msec in the frequency range (band) higher than the carrier index #64. Because the frequency changes every 1 msec, the signal energy attenuation ratio also changes in accordance with the communication distance. The ADSL modem apparatus 2 of the second embodiment estimates the communication distance based upon the signal energy attenuation of the SWEEP signal in addition to the signal energy attenuation of the carriers for FLAG used in Annex A of G.hs. The frequency (carrier index) of the SWEEP signal to be used for the estimation of communication distance can be arbitrarily selected. However, it is preferable to select a carrier index higher than #64, because the communication standard (Annex A of G.hs) does not use the signals in this frequency range (band). In Fig. 6, carrier indexes 128 and 255 are examples of selected SWEEP signals. In this embodiment, carrier indexes 128 and 255 are upstream and downstream SWEEP signals to be used for estimation of communication distance, respectively.

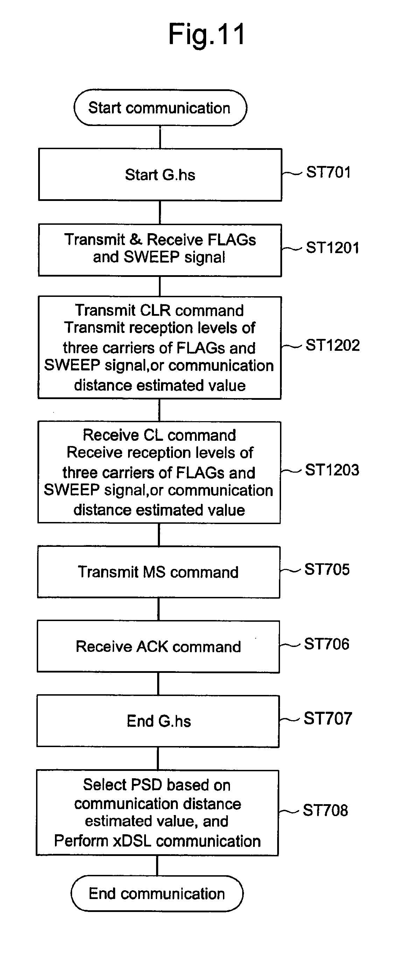

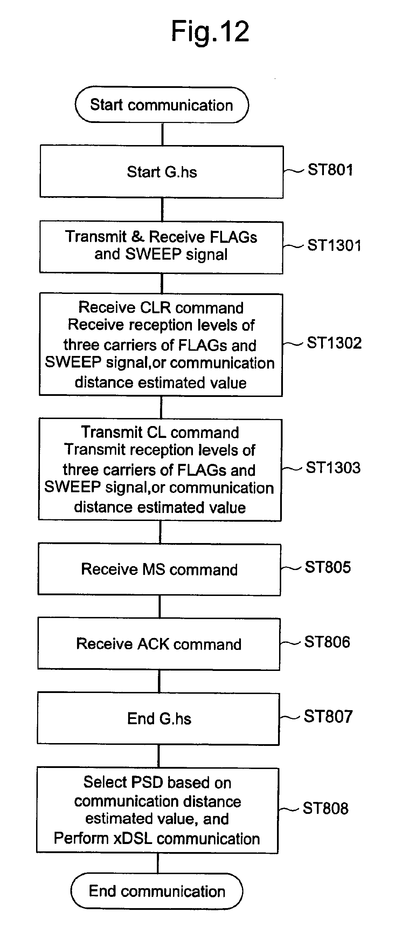

An example of a communication operation of the ADSL modem apparatus 2 of the second embodiment is explained. Fig. 11 is a flowchart illustrating a communication operation of the ADSL modem apparatus 2 at the remote side communication system. Fig. 12 is a flowchart illustrating a communication operation of the ADSL modem apparatus 2 at the center side communication system. If the reference numeral in Fig. 12 or 13 is the same as that in Fig. 7 or 8, the same process is performed; thus, the explanation will be omitted.

The remote ADSL modem apparatus 2 in the second embodiment begins G.hs (ST 701), and then exchanges SWEEP signals as well as FLAG signals with the center ADSL modem apparatus 2 (ST 1201). Upon receiving these signals, the remote ADSL modem apparatus 2 estimates the communication distance to the center ADSL modem apparatus 2 based on the reception levels of both the two carriers (#40 and #64) for the downstream FLAG and the SWEEP signal (#255). More specifically, the communication distance is estimated by referring to the carrier table stored in the RAM 33 in accordance with the amount of signal energy attenuation of the two carriers and the SWEEP signal.

In order to estimate communication distance to the opposing ADSL modem apparatus 2, the remote ADSL modem apparatus 2 selects any two of the received multiple carriers (#40, #64 and #255) and compares the reception levels thereof. For example, if the signal energy of carrier index #255 is attenuated by 18dB from the signal energy of the carrier index #64, the communication distance is estimated as 1km. Similarly, the reception levels of #40 and #255, or #40 and #64 can be used to estimate the communication distance. Moreover, two or more of those combinations of carrier indexes can be used to improve reliability of the estimation.

After the communication distance has been estimated, the remote ADSL modem apparatus 2 sends a CLR command to the center ADSL modem apparatus 2 (ST 1202). By the transmission of the CLR command, the remote ADSL modem apparatus 2 informs the center ADSL modem apparatus 2 of the reception levels of the two carriers for the FLAG and the SWEEP signal, both received from the center ADSL modem apparatus 2, or the communication distance estimated value, which is estimated in accordance with the reception levels.

After the CLR command has been sent, the remote ADSL modem apparatus 2 receives CL command, which is sent by the center ADSL modem apparatus 2 in response to the CLR command (ST 1203). By the reception of CL command, the remote ADSL modem apparatus 2 is informed of the reception levels of the three carriers for the FLAG and the SWEEP signal, both sent by the remote ADSL modem apparatus 2, or the communication distance estimated value, which is estimated in the center ADSL modem apparatus 2 in accordance with the reception levels. Thus, the remote ADSL modem apparatus 2 obtains the communication distance estimated values estimated by both the center and remote ADSL modem apparatuses 2.

Upon reception of the CL command, the remote ADSL modem apparatus 2 terminates G. hs, after transmission of a MS command and reception of ACK command, in the same manner as the first embodiment (ST 705 - ST 707). Then, the remote ADSL modem apparatus 2 selects a PSD based upon the communication distance estimated values, and performs xDSL communication with the selected PSD (ST 708).

Meanwhile, the center ADSL modem apparatus 2 in the second embodiment begins G. hs (ST 801), and then exchanges SWEEP signals as well as FLAG signals with the remote ADSL modem apparatus 2 (ST 1301). Similar to the remote ADSL modem apparatus 2, the center ADSL modem apparatus 2 estimates the communication distance to the remote ADSL modem apparatus 2 based upon the reception levels of the three carriers (#9, #17 and #25) for the FLAG signals and the SWEEP signal (#128), received from the remote ADSL modem apparatus 2.

In order to estimate communication distance to the opposing ADSL modem apparatus 2, the center ADSL modem apparatus 2 selects any two of the received multiple carriers (#9, #17, #25 and #128) and compares the reception levels thereof. For example, if the signal energy of carrier index #128 is attenuated by 104dB from the signal energy of the carrier index #25, the communication distance is estimated as 9km. Two or more of those combinations of carrier indexes can be used to improve reliability of the estimation.

After the communication distance has been estimated, the center ADSL modem apparatus 2 receives a CLR command sent by the remote ADSL modem apparatus 2 (ST 1302). By the reception of CLR command, the center ADSL modem apparatus 2 is informed of the reception levels of the two carriers for the downstream FLAG and the SWEEP signal, both sent by the center ADSL modem apparatus 2, or the communication distance estimated value estimated by the remote ADSL modem apparatus 2. Thus, the center ADSL modem apparatus 2 obtains the communication distance estimated values estimated by both the center and remote ADSL modem apparatuses 2.

After the CLR command has been received, the center ADSL modem apparatus 2 sends a CL command to the remote ADSL modem apparatus 2 (ST 1303). The CL command includes the reception levels of the three carriers for upstream FLAG and the SWEEP signal, both received from the remote ADSL modem apparatus 2, or the communication distance estimated value, which is estimated by the center ADSL modem apparatus based upon the reception levels.

After the CL command has been sent, similar to the first embodiment, the center ADSL modem apparatus terminates G. hs through the reception of an MS command and transmission of an ACK command (ST 805 - ST 807), selects a PSD in accordance with the communication distance estimated values, and performs xDSL communication with the selected PSD (ST 808).

As described above, the ADSL modem apparatus 2 of the second embodiment estimates the communication distance to the opposing ADSL modem apparatus 2 based upon SWEEP signals, which are output while the frequency is changing, as well as carriers for the FLAG exchanged in G. hs. Accordingly, even if the carriers for the FLAG are not properly exchanged and it is difficult to estimate the communication distance to the opposing ADSL modem apparatus 2 based on only those carriers for FLAG, the communication distance to the opposing ADSL modem apparatus 2 can be securely estimated by using the SWEEP signals. As a result, because a PSD can be selected in accordance with the securely estimated communication distance and xDSL communication can be performed using the selected PSD, the ADSL communication can be performed in a communication distance exceeding the conventionally usable communication distance. In the second embodiments, one SWEEP signal is selected for each of the upstream and downstream lines. However, more than one SWEEP signals can be used for each line to improve the reliability of estimation.

In the embodiments described above, the communication distance to the opposing ADSL modem apparatus 2 is estimated based upon the signal energy attenuation of carriers used in Annex A of G. hs. However, the present invention is not limited thereto. For example, the present invention can apply to the carriers used in Annex B of G. hs or Annex C of G. hs. These modifications can obtain the same effects as those obtained by the above-described embodiments.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2003-290680 filed on August 8, 2003, entire content of which is expressly incorporated by reference herein.

## Claims

1. An ADSL modem apparatus comprising:
a transmitter-receiver that transmits and receives a carrier specified by a communication standard in a handshake procedure; and
an estimation unit that estimates a communication distance to an opposing ADSL modem apparatus in accordance with a reception level of the carrier.

2. The ADSL modem apparatus according to claim 1, wherein the transmitter-receiver transmits and receives a plurality of carriers, and
the estimation unit estimates the communication distance to the opposing ADSL modem by comparing two reception levels of two carriers selected from the plurality of carriers.

3. The ADSL modem apparatus according to claim 1, further comprising a communication unit that changes frequency distribution of signal energy for a transmission signal in accordance with the communication distance estimated by the estimation unit.

4. The ADSL modem apparatus according to claim 3, wherein the communication unit decreases signal energy in a high frequency region and increases signal energy in a low frequency region, when the communication distance to the opposing ADSL modem apparatus increases.

5. An ADSL modem apparatus, comprising:
a transceiver-receiver that transmits and receives a carrier specified by a communication standard and a signal output with changing frequencies in a handshake procedure;
an estimation unit that estimates a communication distance to an opposing ADSL modem apparatus in accordance with a reception level of the carrier and a reception level of the signal output with changing frequencies.

6. The ADSL modem apparatus according to claim 1, wherein the ADSL modem apparatus is located at a remote side, and estimates the communication distance to the opposing ADSL modem apparatus located at a center side.

7. The ADSL modem apparatus according to claim 5, wherein the ADSL modem apparatus is located at a remote side, and estimates the communication distance to the opposing ADSL modem apparatus located at a center side.

8. The ADSL modem apparatus according to claim 1, wherein the ADSL modem apparatus is located at a center side, and estimates the communication distance to the opposing ADSL modem apparatus located at a remote side.

9. The ADSL modem apparatus according to claim 5, wherein the ADSL modem apparatus is located at a center side, and estimates the communication distance to the opposing ADSL modem apparatus located at a remote side.

10. A communication method performed in an ADSL communication apparatus, comprising:
receiving a carrier specified by a communication standard in an handshake procedure from an opposing ADSL communication apparatus;
estimating a communication distance to the opposing ADSL modem apparatus in accordance with a reception level of the carrier; and
changing frequency distribution of signal energy for a transmission signal in accordance with the estimated communication distance.

11. The communication method according to claim 10, wherein the changing decreases a signal energy in a high frequency region and increases a signal energy in a low frequency region, when the communication distance to the opposing ADSL modem apparatus increases.

12. The communication method according to claim 10, further comprising:
receiving at least one sweep signal, the sweep signal being output with changing frequencies by the opposing ADSL modem apparatus,
wherein the estimating estimates the communication distance to the opposing ADSL modem apparatus in accordance with a reception level of the at least one sweep signal in addition to the reception level of the carrier.
